# EUROPEAN PATENT SPECIFICATION

(11) **EP 1 007 905 B1**
(45) Date of publication and mention of the grant of the patent: **29.06.2005**
(21) Application number: 97951412.2
(22) Date of filing: 19.12.1997
(51) Int. Cl.: G01B 11/26, G01B 11/275

(54) **METHOD FOR MEASURING THE ORIENTATION OF A SURFACE**
VERFAHREN ZUM MESSEN DER ORIENTIERUNG EINER OBERFLÄCHE
PROCEDE PERMETTANT DE MESURER L'ORIENTATION D'UNE SURFACE

(30) Priority: 20.12.1996 SE 9604742
(43) Date of publication of application: 14.06.2000
(73) Proprietor: VOLVO LASTVAGNAR AB, 405 08 Göteborg (SE)
(72) Inventor: ASTRÖM, Anders, S-582 49 Linköping (SE); ASTRAND, Erik, S-583 33 Linköping (SE)
(74) Representative: Hellbom, Lars Olof
(86) International application number: PCT/SE1997/002192
(87) International publication number: WO 1998/028594

(56) References cited:
- EP-A- 0 280 941
- WO-A-96/38004
- DE-A- 4 419 584
- GB-A- 2 280 259
- US-A- 5 247 338
- US-A- 5 463 463

## Description

The present invention relates to a method of measuring the orientation of a surface relative to a geometric reference, such as an axis or a plane, comprising the following steps: projecting by means of a radiation source a first line of light onto the surface; and detecting by means of a first detector the position of the first line of light projected on the surface relative to the position of a first reference line on the surface, detecting the angle between the first line of light projected onto the surface and the first reference line ; projecting, by means of the radiation source (5), a second line of light (8) onto the surface; detecting, by means of the first detector, the position of the second line of light projected onto the surface relative to the position of a second reference line on the surface; and detecting the angle between the second line of light projected onto the surface and the second reference line.

It is previously known to calculate the shape of a board by means of three-dimensional profile measurement. In this measuring method a laser is used which projects a laser line on the board. The laser line is detected by a detector in the form of a camera mounted at a certain angle relative to the laser. By sweeping the laser line along the board or feeding the board past the line, the line will move relative to a reference line if the profile of the board changes along the length of the board. Due to the angle between the camera and the laser, the image received by the detector will be a line, the position of which provides directly a measure of the height of the board above a reference plane. With this known measuring method, only the shape of the board is calculated. How the board is oriented in space relative to the reference plane is not calculated by this known measuring method.

US-A-5 463 463 describes an apparatus for determining the position of an object, such as a car wheel on an actuator assembly, with respect to a reference system. A target is attached to the wheel, which is rotated. A projector directs two lines of light onto the target surface. A detector determines the position of the two lines projected onto the target relative to the position of respective reference lines and computes the angular orientation of the wheel.

In DE-A-44 19 584, the measurement is carried out on a vehicle rolling on a substrate. In this document, the projector and the detector are provided in a measuring head which is mounted in a fixed relationship to the vehicle.

The purpose of the present invention is to provide touch less measurement of the orientation of a rotating surface relative to a geometric reference which allows an accurate measurement to be rapidly obtained.

This is achieved according to the invention by detecting the position of the first and second lines of light when the surface rotates and rolls on a substrate in a direction passing the radiation source and the first detector.

With such a measuring method, accurate and rapid measurement is obtained. The measurement provides values for the angle of the surface and its distance relative to a geometric reference. Based on these values, the angle and distance of the surface relative to the geometric reference can be adjusted, if so desired.

The invention will now be described in more detail with reference to examples shown in the accompanying drawings, where
Figure 1 shows schematically a measuring device according to the present invention,
Figure 2 shows a schematic view from above of a vehicle passing between two measuring units, and
Figure 3 shows a schematic view of a vehicle seen from behind, passing between three measuring units.

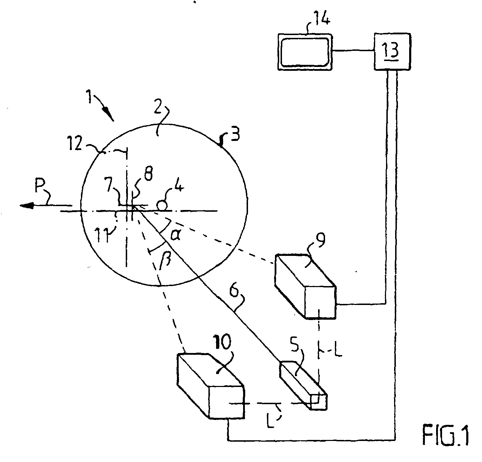

Fig. 1 shows a measuring device I according to the present invention for touchless measurement of the orientation of a surface 2 relative to a geometric reference, such as an axis or a plane. According to the example in Fig. 1, the angles are measured at which a rotating disc 3 is oriented relative to an imaginary reference axis in space. The disc 3 can, at the same time as it rotates, also roll in the direction of the arrow P. If the angle or angles of the disc 3 are measured, the direction of the rotational axis 4 of the disc 3 can be determined. And if so desired, the disc 3 can be set so that its rotational axis 4 coincides with the reference axis.

The measuring device 1 comprises a radiation source 5 in the form of at least one laser, which is arranged, by means of a light beam 6 in the form of laser rays, to project first and second lines of light 7 and 8, respectively, in the form of laser lines on the surface 2. First and second detectors 9 and 10, respectively, are arranged to detect the first and second laser line 7, 8 on the surface 2. The first detector 9 is arranged so that the angle α between the light beam 6 emitted by the radiation source 5 and the aiming direction of the first detector 9 towards the surface 2 is non-zero. The angle α is preferably in the interval 20°- 60°, but even angles outside this interval are conceivable. The other detector 10 as well is arranged so that the angle β between the light beam 6 emitted by the radiation source 5 and the aiming direction of the second detector 10 towards the surface 2 is non-zero. The angle β is preferably selected to be the same angle as α but can be different. If the first and second laser lines 7, 8 intersect or orthogonally to form a cross, the first and second detectors 9, 10 should be arranged at right angles with the radiation source 5 at the corner of the angle, as indicated by the dashed line L in Fig. 1.

The radiation source 5 comprises at least one laser which, by means of an optical device (not shown), produces the first and second laser lines 7, 8. The radiation source 5 can also comprise a plurality of lasers, one for each laser line 7, 8.

The first and second detectors 9, 10 can each be a common video camera of CCD-type, but in order to increase the accuracy of the measurement, preferably a smart image sensor of the type MAPP (Matrix Array Picture Processor) is used.

The method of measuring the orientation of the surface 2 relative to the geometric reference, comprises the steps of projecting from the radiation source 5 in the form of a laser first and second lines of light 7, 8 in the form of two laser lines formed on the surface 2. The first and second detectors 9, 10 thereafter detect, sequentially or simultaneously, the positions and angles of the laser lines 7, 8 projected on the surface relative to the positions of first and second reference lines 11 and 12, respectively, on the surface.

Preferably, the first and second laser lines 7, 8 intersect orthogonally, but this is no precondition for carrying out the measurement. The laser lines 7, 8 can intersect at an angle different from 90°. The laser lines 7, 8 can also be projected at different locations on the surface 2, so that they do not need to intersect.

The detected positions and angles for the first and second laser lines 7, 8 are sent to a processor 13 which processes the detected information and, after processing, presents the orientation of the surface 2 relative to the geometric reference. This information can be presented on a monitor 14, for example.

It should be pointed out that it is sufficient with one detector 9 to detect both the first and second laser lines 7, 8. The measuring accuracy can, however, be improved if a separate detector is used for each laser line. It is also conceivable to project more than two laser lines on the surface 2.

The method and device according to the invention can, in accordance with a first embodiment, be used to reduce vehicle tyre wear arising as a result of wheel misalignment and/or trailer misplacement and to achieve the smallest projected width of the vehicle in the driving direction to thereby minimize air drag and fuel consumption.

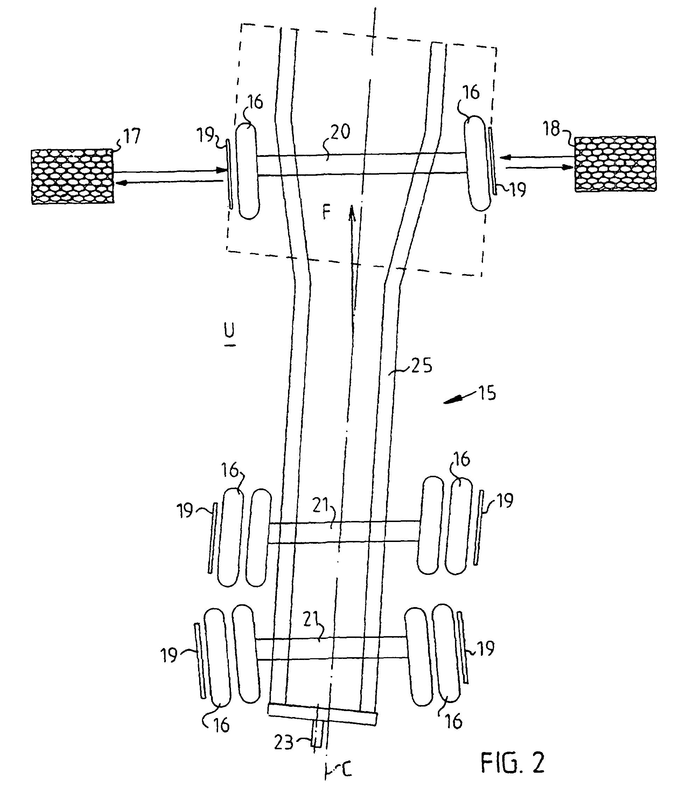

Fig. 2 shows schematically a view from above of a vehicle 15 travelling forward in the direction F with the wheels 16 rolling on a substrate U between at least two measuring units 17, 18 standing free from the vehicle 15. Each measuring unit 17, 18 comprises a radiation source 5' in the form of a laser which, as the vehicle 15 passes the measuring unit 17, 18, projects first and second laser lines onto the outside of each wheel 16, i.e. the side of the wheel facing away from the vehicle 15. In Fig. 2, a reflecting means 19 has been mounted on the outside of each wheel 16. The laser lines from each radiation source 5' are projected on this reflecting means 19. The information detected by the detector 9' is processed in a processor 13' which provides values for the alignment of the rotational axis of each wheel 16, the distance of each wheel 16 to its respective measuring unit 17, 18, the distance between the respective wheels 16 on either side of the vehicle 15 and the longitudinal geometrical centerline C of the vehicle 15. The measured values for the alignment of the rotational axis of each wheel 16 are compared with predetermined ideal values for the alignment of the rotational axes of the wheels 16. Finally, the wheels 16 are adjusted so that the differences between the measured values for the alignment of the rotational axis of each wheel 16 and the ideal values for the alignment of the rotational axis of each wheel 16 are as small as possible. Preferably, two detectors are disposed at each measuring unit, with the first detector detecting the first laser line and the second detector detecting the second laser line.

When the wheels 16 pass each measuring unit 17, 18, the time it takes for the wheels 16 to pass each measuring unit 17, 18 is measured. If the speed of the vehicle 15 is known, the distance between each wheel 16 on each side of the vehicle 15 can be computed. In order to determine the speed of the vehicle 15, a speedometer (not shown) in the form of a laser for example, can be arranged in front of or above the vehicle 15. The laser sends a measuring ray towards the vehicle 15 when it passes the measuring unit 17, 18, and the speed of the vehicle 15 can be measured. The speedometer can be coupled to the processor 13' which computes the distance between the respective wheel 16 on each side of the vehicle 15 based on the known speed and the time it takes for the wheels 16 to pass the measuring units 17, 18.

When the alignment of the rotational axes of the wheels 16 agrees with the ideal values for the alignment of the rotational axis of each wheel 16, and when the alignment of each axle 20, 21 has been adjusted relative to the longitudinal geometric centerline C of the vehicle 15, the longitudinal geometric centerline C will coincide with the direction of travel F of the vehicle 15. This creates the smallest projected width of the vehicle 15, as seen in its direction of travel F.

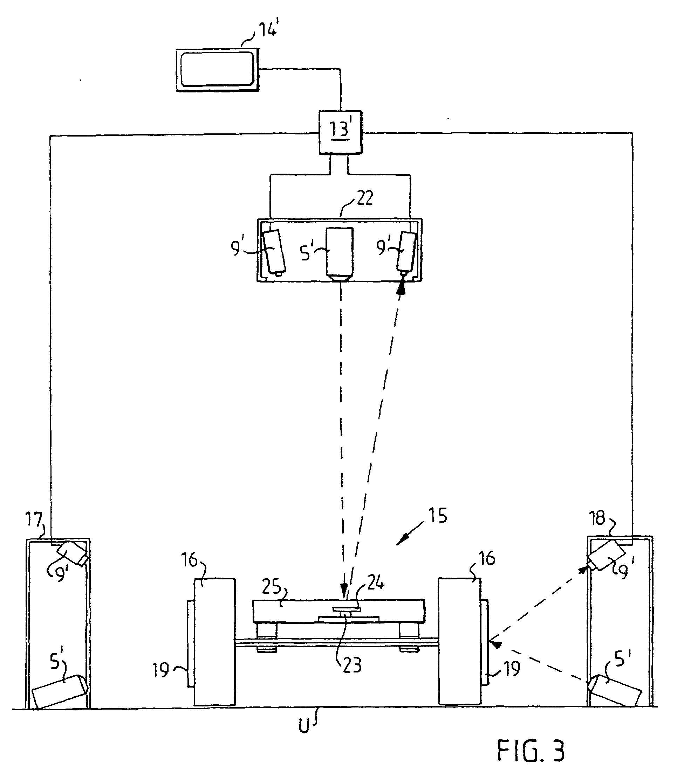

Fig. 3 shows a schematic view of a vehicle 15 as seen from behind, passing three measuring units 17, 18, 22. A measuring unit 22 is arranged above the vehicle 15 and comprises a radiation source 5' in the form of a laser, which projects first and second laser lines on the towing hitch 23 of the vehicle 15. A reflecting means 24 is mounted on the towing hitch 23 of the vehicle 15, and laser lines from the radiation source 5' are projected on the reflecting means 24. The information detected by the detector 9' is processed in the processor 13' showing how far the towing hitch 23 is remote from the longitudinal geometrical centerline C of the vehicle 15 and how high above the road surface U the towing hitch is situated. The result of the measurement can be presented on the monitor 14', for example. Finally, the towing hitch 23 is moved or the frame 25 of the vehicle 15 is adjusted so that the towing hitch 23 is placed on the longitudinal geometric centerline C of the vehicle 15.

The reflecting means 19, 24 can be a flat disc mounted on the outside of each wheel 16 and on the towing hitch 23. Alternatively, the laser lines can be projected directly on the tyre side or rim (not shown) of each wheel 16 and directly on the towing hitch 23. When a disc is mounted on the outside of a wheel 16, an angular error can occur if the disc is placed in such a manner that the rotational axis of the wheel 16 is not normal to the disc. When processing measuring data, however, compensation for this error can be made in the processor 14'.

## Claims

1. Method of measuring the orientation of a surface (2) relative to a geometric reference, such as an axis or a plane, comprising the following steps:
projecting by means of a radiation source (5) a first line of light (7) onto the surface; and
detecting by means of a first detector (9) the position of the first line of light (7) projected on the surface (2) relative to the position of a first reference line (11) on the surface (2),
detecting the angle between the first line of light (7) projected onto the surface (2) and the first reference line (11);
projecting, by means of the radiation source (5), a second line of light (8) onto the surface (2);
detecting, by means of the first detector (9), the position of the second line of light (8) projected onto the surface (2) relative to the position of a second reference line (12) on the surface (2); and
detecting the angle between the second line of light (8) projected onto the surface (2) and the second reference line (12),
**characterized by:**
that the detection of the position of the first and second lines of light (7, 8) is made when the surface (2) rotates and rolls on a substrate (U) in a direction (P) passing the radiation source (5) and the first detector (9).

2. Method according to Claim 1, **characterized in that** the first and second lines of light (7,8) intersect.

3. Method according to Claim 1 or 2, **characterized in that** the first and second lines of light (7,8) intersect orthogonally.

4. Method according to one or more of the preceding claims, **characterized in that** the second line of light (7, 8) is detected by a second detector (10), when the surface (2) rotates and rolls on a substrate (U) in a direction (P) passing the second detector (10).

5. Method according to one or more of the preceding claims, **characterized in that** the detected positions and angles of the first and second lines of light (7,8) are sent on to a processor (13) which processes the detected information and which, after said processing, provides the orientation of the surface (2) relative to the geometric reference.

6. Method according to claim 5, **characterized in that** a reflecting means, by means of a flat disc (19) is mounted on the surface (2).

7. Method according to claim 6, **characterized in that** a compensation of an angular error between a normal to the disc (19) and a rotational axis of the rotating surface (2) is made in the processor (13).

## Patentansprüche

1. Verfahren zum Messen der Ausrichtung einer Oberfläche (2) in Bezug auf eine geometrische Referenz, wie eine Achse oder eine Ebene, umfassend die folgenden Schritte:
Projizieren einer ersten Lichtlinie (7) mit einer Strahlungsquelle (5) auf die Oberfläche; und
Erfassen der Position der auf der Oberfläche (2) projizierten, ersten Lichtlinie (7) mittels eines ersten Detektors (9) in Bezug auf die Position einer ersten Referenzlinie (11) auf der Oberfläche (2),
Erfassen des Winkels zwischen der auf die Oberfläche (2) projizierten, ersten Lichtlinie (7) und der ersten Referenzlinie (11);
Projizieren einer zweiten Lichtlinie (8) mittels einer Strahlungsquelle (5) auf die Oberfläche (2);
Erfassen der Position der auf die Oberfläche (2) projizierten, zweiten Lichtlinie (8) mittels des ersten Detektors (9) in Bezug auf die Position einer zweiten Referenzlinie (12) auf der Oberfläche (2); und
Erfassen des Winkels der zwischen der auf die Oberfläche (2) projizierten, zweiten Lichtlinie (8) und der zweiten Referenzlinie (12),
**dadurch gekennzeichnet, dass**
die Erfassung der Position der ersten und der zweiten Lichtlinie (7, 8) vorgenommen wird, wenn die Oberfläche (2) rotiert und auf einem Substrat (U) in einer Richtung (P) rollt, die die Strahlungsquelle (5) und den ersten Detektor (9) passiert.

2. Verfahren nach Anspruch 1, **dadurch gekennzeichnet, dass** die erste und die zweite Lichtlinie (7, 8) einander schneiden.

3. Verfahren nach Anspruch 1 oder 2, **dadurch gekennzeichnet, dass** die erste und die zweite Lichtlinie (7, 8) einander orthogonal schneiden.

4. Verfahren nach einem oder mehreren der vorhergehenden Ansprüche, **dadurch gekennzeichnet, dass** die zweite Lichtlinie (7, 8) durch einen zweiten Detektor (10) erfasst wird, wenn die Oberfläche (2) rotiert und auf einem Substrat (U) in einer Richtung (P) rollt, welche den zweiten Detektor (10) passiert.

5. Verfahren nach einem oder mehreren der vorhergehenden Ansprüche, **dadurch gekennzeichnet, dass** die erfassten Positionen und Winkel der ersten und der zweiten Lichtlinie (7, 8) weiter zu einem Prozessor (13) geschickt werden, der die erfasste Information verarbeitet und der nach der Verarbeitung die Ausrichtung der Oberfläche (2) in Bezug auf die geometrische Referenz bereitstellt.

6. Verfahren nach Anspruch 5, **dadurch gekennzeichnet, dass** eine Reflektiereinrichtung mittels einer ebenen Scheibe (19) an der Oberfläche (2) montiert ist.

7. Verfahren nach Anspruch 6, **dadurch gekennzeichnet, dass** ein Ausgleich eines Winkelfehlers zwischen einer Normalen zu der Scheibe (19) und einer Rotationsachse der rotierenden Oberfläche (12) in dem Prozessor (13) vorgenommen wird.

## Revendications

1. Procédé de mesure de l'orientation d'une surface (2) par rapport à une référence géométrique, telle qu'un axe ou un plan, comportant les étapes suivantes consistant à :
projeter par l'intermédiaire d'une source de rayonnement (5) une première ligne de lumière (7) sur la surface, et
détecter par l'intermédiaire d'un premier détecteur (9) la position de la première ligne de lumière (7) projetée sur la surface (2) par rapport à la position d'une première ligne de référence (11) située sur la surface (2),
détecter l'angle entre la première ligne de lumière (7) projetée sur la surface (2) et la première ligne de référence (11),
projeter, par l'intermédiaire de la source de rayonnement (5), une seconde ligne de lumière (8) sur la surface (2),
détecter, par l'intermédiaire du premier détecteur (9), la position de la seconde ligne de lumière (8) projetée sur la surface (2) par rapport à la position d'une seconde ligne de référence (12) située sur surface (2), et
détecter l'angle entre la seconde ligne de lumière (8) projetée sur la surface (2) et la seconde ligne de référence (12),
**caractérisé en ce que** :
la détection de la position des première et seconde lignes de lumière (7, 8) est réalisée lorsque la surface (2) tourne et roule sur un substrat (U) dans une direction (P) passant par la source de rayonnement (5) et le premier détecteur (9).

2. Procédé selon la revendication 1, **caractérisé en ce que** les première et seconde lignes de lumière (7, 8) s'entrecoupent.

3. Procédé selon la revendication 1 ou 2, **caractérisé en ce que** les première et seconde lignes de lumière (7, 8) s'entrecoupent de manière orthogonale.

4. Procédé selon l'une quelconque des revendications précédentes, **caractérisé en ce que** la seconde ligne de lumière (7, 8) est détectée par un second détecteur (10), lorsque la surface (2) tourne et roule sur un substrat (U) dans une direction (P) passant par le second détecteur (10).

5. Procédé selon l'une quelconque des revendications précédentes, **caractérisé en ce que** les positions et angles détectés des première et seconde lignes de lumière (7, 8) sont envoyés à un processeur (13) qui traite les informations détectées et qui, après ledit traitement, fournit l'orientation de la surface (2) par rapport à la référence géométrique.

6. Procédé selon la revendication 5, **caractérisé en ce que** des moyens de réflexion, par l'intermédiaire d'un disque plat (19), sont montés sur la surface (2).

7. Procédé selon la revendication 6, **caractérisé en ce qu'**une compensation d'une erreur angulaire entre une normale au disque (19) et un axe rotationnel de la surface rotative (2) est réalisée dans le processeur (13).
